# EUROPEAN PATENT SPECIFICATION

(11) **EP 3 717 719 B1**
(45) Date of publication and mention of the grant of the patent: **22.12.2021**
(21) Application number: 18826100.2
(22) Date of filing: 13.11.2018
(51) Int. Cl.: E04H 12/22

(54) **ANCHORING UNIT**
VERANKERUNGSEINHEIT
UNITÉ D'ANCRAGE

(30) Priority: 27.11.2017 PL 42361917
(43) Date of publication of application: 07.10.2020
(73) Proprietor: Energia W Kogeneracji Ewk Spolka Akcyjna, 44-189 Wilcza (PL)
(72) Inventor: SZYMALA, Krystian, 44-207 Rybnik (PL); SZYMALA, Milosz, 44-207 Rybnik (PL)
(74) Representative: Malcherek, Piotr
(86) International application number: PCT/IB2018/058901
(87) International publication number: WO 2019/102299

(56) References cited:
- EP-A1- 3 241 952
- EP-B1- 0 483 158
- WO-A1-2012/004633
- DE-A1- 1 928 145
- FR-A1- 2 839 099

## Description

The invention is related to a anchoring unit designed for fixation of building structural components in ground, where such structural member may include but are not limited to advertising boards or photovoltaic panels.

The current state of the art, for instance EP 2 419 585 discloses an anchoring system designed for fixation of various objects, for instance building load-bearing structures, in ground. The anchoring system comprises a hollow box-like support structure that is empty inside and serves as a socket for the object to be mounted. Longitudinal tubular guiding members are fixed to outer walls of that support structure and an anchoring rod with the length exceeding the length of said tubular member is inserted into each of these members so that to protrude outside via the output end of it. Simultaneously, the tubular guiding members have the closed cross-sections and define direction of the anchoring rod insertion so that they are inclined against the direction substantially perpendicular to the ground. During operation both the box-like support structure and the tubular guiding members, in particular their output ends are positioned at least partly above the ground where the anchored object is to be fixed. In turn, the output ends of tubular guiding members are located substantially at these corners of the box-like support structure that are immersed into the ground or contacting the same. Moreover, the inlet and output ends of tubular guiding members are deployed oppositely one another.

Similarly, EP 483 158, which shows the preamble of claim 1 and discloses an appliance designed to fix objects of various types in ground with the use of anchors or anchoring rods mutually tilted one to another. The appliance is made up of an prefabricated block of various shapes and having at least two pairs of holes for guiding anchors. The prefabricated block itself is made of plastic or metallic shaped sections connected in non-detachable way, for instance by welding. Each pair of holes has an input hole and the output hole to guide the anchors. Axes of these openings are arranged in such a way that define the direction for anchors to penetrate the ground. Moreover, holes of each pair of holes are provided in different walls of the prefabricated block, which makes the sufficiently distant one from another to provide steady support for anchors driven throughout as well as for the object to be fixed.

The present invention is intended to provide an anchoring unit that enables fixation of heavy support structures into ground yet with simple design of the unit and easy assembling and installation.

The invention refers to an anchoring unit suitable for fixation of building structural components, where the unit comprises a mounting socket and support brackets provided with holes for anchoring rods, whereas two adjacent twin support brackets comprise an inlet hole made in one bracket and an outlet hole in the second, twin bracket and these holes define the direction to guide the anchoring rod. The longitudinal axis of the guiding line is tilted at the acute angle to the plane that is perpendicular to the longitudinal axis of the mounting socket. The essence of the invention consists in the fact that the anchoring unit comprise a first pair of parallel plates with two longitudinal cutouts in each plate and the second pair of parallel plates with longitudinal cutouts in each plate. Individual plates are deployed in mutually crosswise manner and are detachably connected by interference fit with the use of said cutouts so that the spatial structure arranged in that way defines a space between the said plates and arranges the said mounting socket with closed cross-section. Plate edges that protrude outside serve as four pairs of said support brackets whereas at least one additional pair of holes for anchoring bolts is made in selected pairs of support brackets. When the unit is projected onto a plane perpendicular to the longitudinal axis of the mounting socket, the guiding directions for anchoring rods of each pair are mutually opposite.

Preferably, an additional hollow section with the closed cross-section corresponding to the cross-section of the mounting socket, is detachably fixed inside the mounting socket. That hollow section is designed to reinforce and stiffen the entire structure and enables extension of the section intended to slide a post of the support structure in the mounting socket and improves its stabilization.

It is also desirable when holes in support brackets are elongated holes, which enables easy positioning of anchoring rods when they are inserted into holes and immersed into ground.

In particular two or three pairs of holes for anchoring rods are made in each pair of support brackets.

In the most preferred embodiment of the invention, the mounting socket projection onto a plane perpendicular to the longitudinal plane of the mounting socket gives the image where longitudinal axes for guiding anchoring bolts are mutual skewed, which enables the best fixation of the anchoring unit in ground since penetration directions of anchoring rods are mutually different.

Key advantages of the anchoring unit according to the present invention include a simple design that enables easy installation and fixation of the unit in ground with high reliability of the unit fixation in ground. The mounting socket is arranged by four plates mutually connected by interference fit. Such assembling of the unit makes it possible to avoid the need of welding, which is a drawback of other typical in the state-of-the-art solutions. Therefore, the structure is not weakened. In addition, such anchoring unit can be assembled from individual components on site, which facilitates transportation and storage of all components. Moreover, the structure according to the present inventions makes it possible to immerse at least eight anchoring rod into ground for each single unit. More anchoring rods, combined with various directions of their immersion into ground substantially increase the strength of fixation, which makes it possible to fix structures with much higher weight, or, alternatively, reduce the number of anchoring units to be used for fixation of the specific object to ground.

The invention is disclosed in details in the following embodiments thereof and on relevant drawings, where:
Fig. 1 is a single plate that is combined with three other plates and makes up a spatial structure of the anchoring unit.
Fig. 2 is a perspective view of the anchoring unit according to the first embodiment of the invention;
Fig. 3 is a side view of the anchoring unit from the fig. 2;
Fig. 4 is a top view of the unit from the fig. 2;
Fig. 5 is the anchoring unit in a perspective view with anchoring rods that are inserted into holes made in pairs of support brackets;
Fig. 6 is a top view of the unit from Fig. 5;
Fig. 7 is a top view of the anchoring unit with a different mutual deployment of guiding for anchoring rods;
Fig. 8 is a perspective view of the anchoring unit of another embodiment of the invention;
Fig. 9 is a side view of the unit from Fig. 8;
Fig. 10 is a top view of the unit from Fig. 8;
Fig. 11 is a perspective view of the unit from Fig. 8 with anchoring rods inserted into holes made in pairs of support brackets;
Fig. 12 is a top view of the unit from Fig. 11;
Fig. 13 is a top view of the anchoring unit with a different arrangement of guiding for anchoring rods;
Fig. 14 is a single plate of the unit for further embodiment of the invention with a different number of holes, and
Fig. 15 is a top view of the anchoring unit with a greater number of anchoring rods.

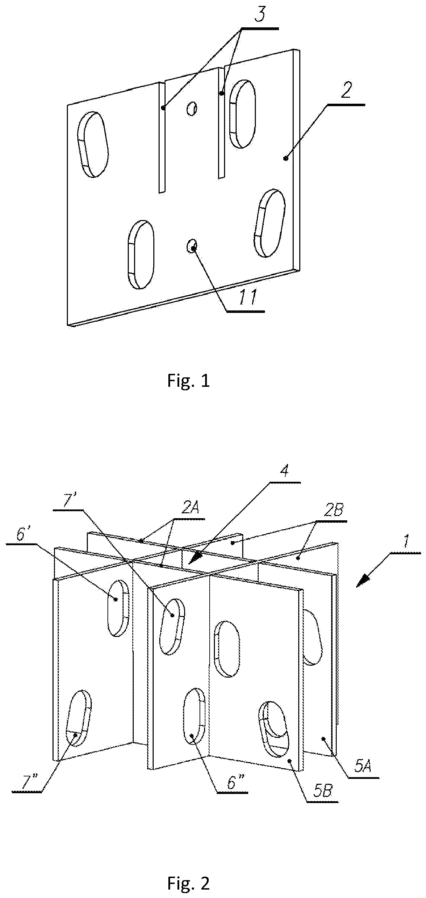

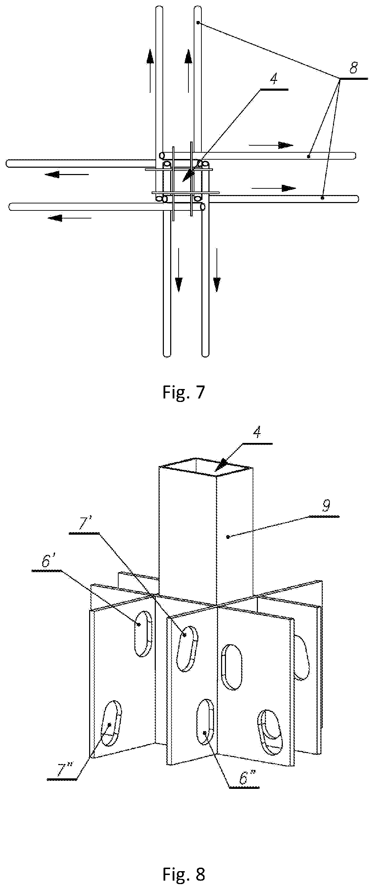

The anchoring unit 1 (Fig. 2) is designed for anchoring of building structural components in ground. The anchoring unit 1 (Fig. 2) is made up of four plates 2 (Fig. 1). Each plate 2 has two longitudinal cutouts 3, in particular slots with matching shapes open at their top sides. Plates 2 are arranged in two pairs of plates 2A and 2B, where the first pair of parallel plates 2A is arranged crosswise with respect to the second pair of plated 2B. Corresponding pairs of plates 2A and 2B are mutually connected in detachable way by means of the interference fit method with the use of cutouts 3 so that the obtained spatial structure defines the encircled space in between of plates 2 and make up the mounting socket 4 with a closed cross-section. The said mounting socket 4 is a place for insertion and fixation of a post or another component of a support structure that is to be fixed to ground. In addition, the edges of the plates 2 that extend outside form four pairs of support brackets 5A and 5B. Each pair of support brackets has two pairs of holes (6', 6") and (7', 7") designed for insertion of anchoring rods. In particular, in the first support bracket of the pair of support brackets 5A, 5B there is inlet hole 6' for the anchoring rod 8, whilst the second support bracket of the pair of support brackets 5A, 5B there is an outlet hole 6" designed for the anchoring bolt 8. The same pair of the support brackets 5A, 5B there is also the second pair of holes 7', 7", where 7' is the inlet hole in the second support bracket and 7" is the output hole in the first support bracket. The mutually corresponding pairs of holes, i.e. the inlet hole 6' and the outlet hole 6" as well as the inlet hole 7' and the outlet hole 7" serve as separate guiding provisions for anchoring rods 8. Longitudinal axes of these guiding provisions are tilted at the acute angle with respect to the plane perpendicular to the longitudinal axle of the mounting socket 4 and define the direction for insertion the anchoring rods into ground. The projection onto a plane perpendicular to the longitudinal axis of the mounting socket 4 shows that guiding direction for insertion of anchoring bolts 8 into the specific pair of support brackets 5A, 5B are mutually opposite. Moreover, Fig. 7 shows, on the projection onto the plane perpendicular to the longitudinal axis of the mounting socket 4, that guiding direction for insertion of anchoring bolts 8 into the specific pair of support brackets 5A, 5B are mutually parallel. Alternatively, which is shown in Fig. 8 - these directions can be mutually skewed. The guiding directions for insertion of anchoring rods 8 can be adjusted by displacements of holes 6', 6", 7', 7".

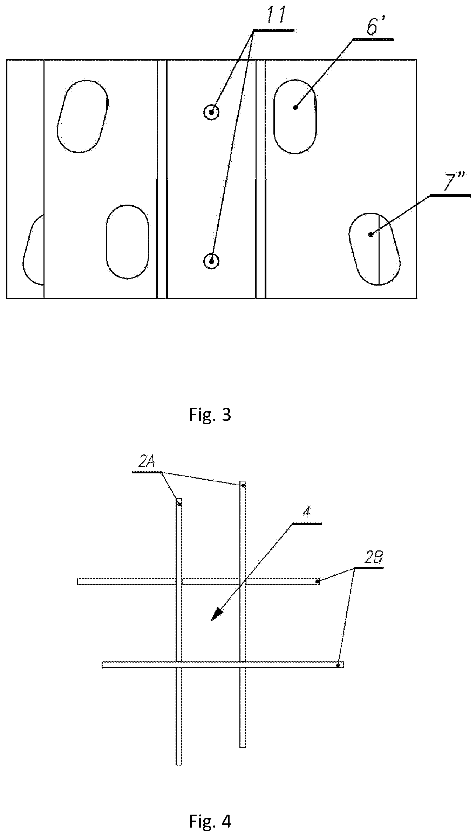

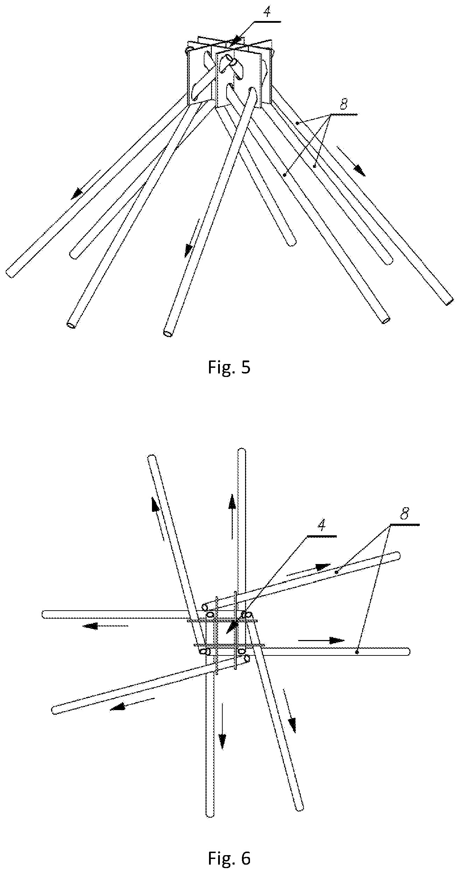

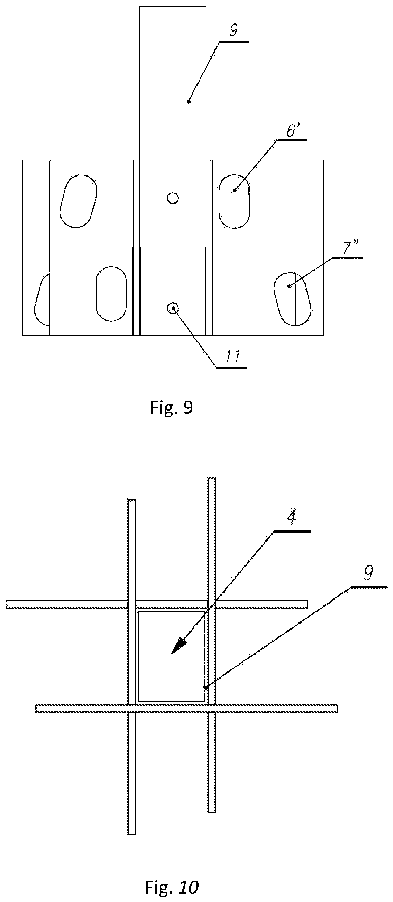

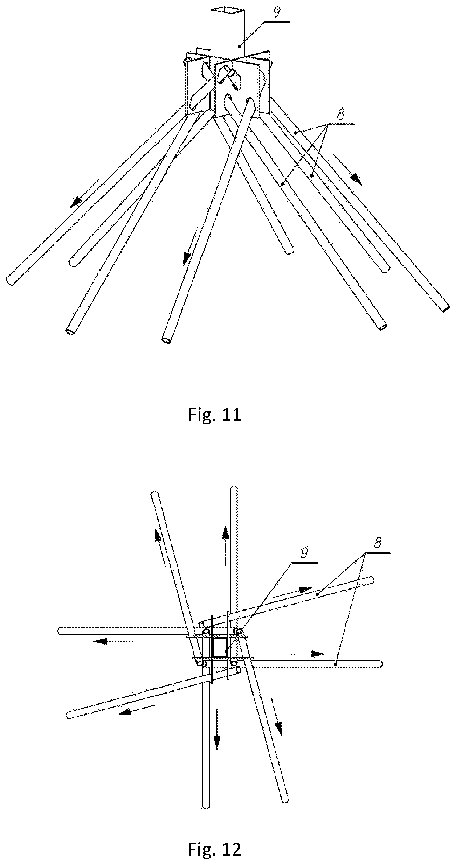

Another embodiment of the invention is explained in Fig. 8 to Fig. 13. In this embodiment an additional hollow section 9 with a closed cross-section corresponding to the cross section of the mounting socket is detachably connected inside the mounting socket 4. Preferably, the section 9 extends to a specific height above the plates 2, which provides additional stiffness for a component of the building structure that is to be inserted into the mounting socket. With regard to other details, this embodiment is identical to embodiments disclosed in Fig.1 to Fig. 7.

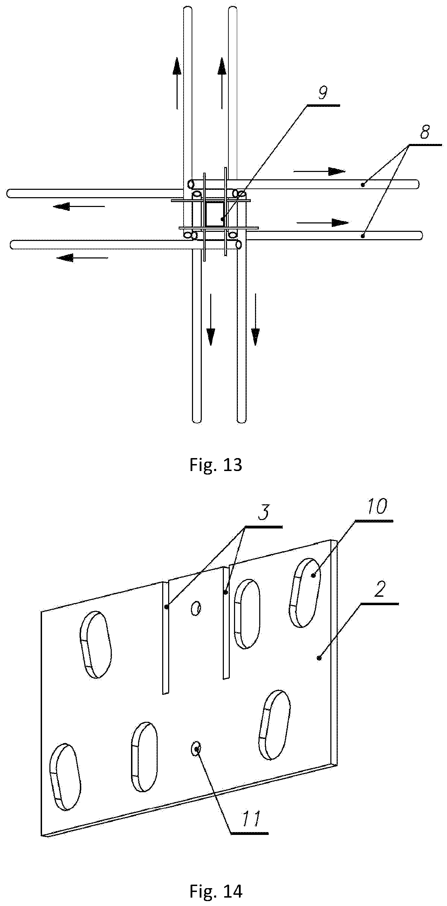

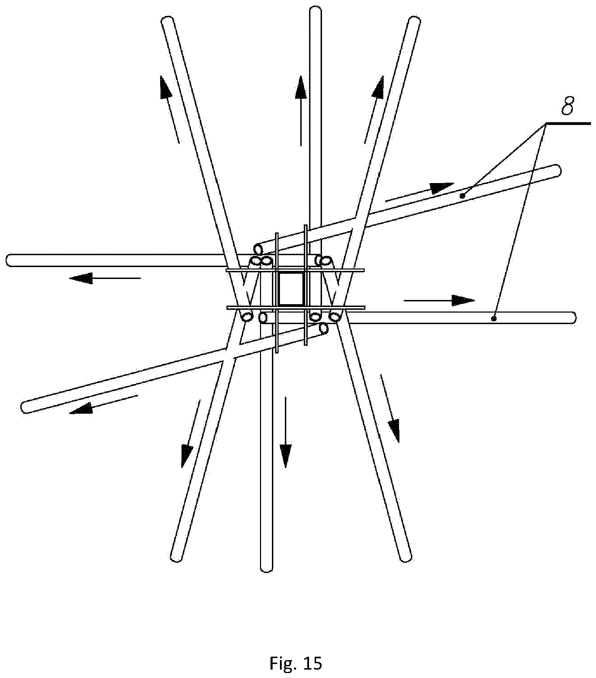

Fig. 14 discloses a plate 2 that has an additional hole 10 at each side, which makes it possible to use such plates 2 to assembly an anchoring unit 1 that can be fixed to ground by means more than eight anchoring rods 8. Fig. 15 presents a top view of such an embodiment where as many as three anchoring rods 8 are driven through holes at each opposite side of the support brackets.

With reference to the foregoing embodiments of the invention it is preferable when holes 6', 6", 7', 7" and 10 in support brackets 5A, 5B are elongated holes with longitudinal axes arranged in parallel or oblique to each other.

Moreover, with reference to all the foregoing embodiments of the present invention, a post or another components of the structure is fixed directly in the mounting socket 4 or an additional hollow section 9 is fixed therein with further insertion of the post or another component of the structure into that hollow section 9, for instance by means of a hole or holes 11 made in the plate 2 (fig. 1, fig. 3, fig. 7 and fig. 14) and bolted connection or other fixation means.

## Claims

1. An anchoring unit (1) designed for fixation of building structure to ground, provided with a mounting socket (4) and support brackets (5A, 5B) provided with holes (6', 6") for anchoring rods (8), where the adjacent support brackets (5A, 5B) that make up a twin pair are provided with an inlet hole (6') made in one bracket and an outlet hole (6") made in the other bracket and these holes define the guiding for an anchoring rod (8) with the longitudinal axis of said guiding tilted at
an acute angle to a plane that is perpendicular to the longitudinal axis of the mounting socket (4), **characterized in that** it comprises a first pair of parallel plates (2A) with two longitudinal cutouts (3) each and a second pair of parallel plates (2B) with two longitudinal cutouts (3) each, and individual pairs of these plates (2A, 2B) are
arranged crosswise one to another and mutually connected by interference fit with the use of the said cutouts (3), so that the arranged spatial structure defines a space in between of the plates (2) where the mounting socket (4) with closed cross section is formed, whilst the plate (2) edges protruding outside to form four
pairs of said support brackets (5A, 5B) and in selected pairs of support brackets (5A, 5B) at least one additional pair of holes (7', 7") is made for anchoring rods (8), and where directions of anchoring rods (8) going through a specific pair of support brackets (5A, 5B) visible on a projection onto a plane perpendicular to the longitudinal axis of the mounting socket (4) are opposite one to another.

2. The anchoring unit according to Claim 1, **characterized in that** an additional hollow section (9) with closed cross-section corresponding to the cross-section of the mounting socket (4) is detachably fixed therein.

3. The anchoring unit according to Claim 1 or Claim 2, **characterized in that** the holes (6', 6", 7', 7", 10) in support brackets (5A, 5B) are elongated .

4. The anchoring unit according to one of Claim 1 to Claim 3, **characterized in that** each pair of support brackets (5A, 5B) has two or three pairs of holes (6', 6", 7', 7",10) designed for anchoring rods (8).

5. The anchoring unit according to one of Claim 1 to Claim 4, **characterized in that** the longitudinal axis of each anchoring rod (8) insertion are mutually oblique as visible on a projection onto a plane perpendicular to the longitudinal axis of the mounting socket (4).

## Patentansprüche

1. Ankeranordnung (1) zur Befestigung von Bauteilen von Bauwerken, ausgestattet mit einer Ankerbuchse (4) und Stützen (5A, 5B) mit Bohrungen (6', 6") für Ankerstangen (8), wobei in den nebeneinander platzierten und ein Paar bildenden Stützen (5A, 5B) Löcher ausgeführt sind, und zwar ein Eintrittsloch (6') in einer Stütze und ein Austrittsloch (6") in der anderen Stütze, die die Führung der Ankerstange (8) definieren, wobei die Längsachse der Führung in einem spitzen Winkel zu einer senkrecht zur Längsachse der Ankerbuchse (4) verlaufenden Ebene geneigt ist, **dadurch gekennzeichnet, dass** sie ein erstes Paar paralleler Platten (2A) mit jeweils zwei Längsausschnitten (3) und ein zweites Paar paralleler Platten (2B) mit jeweils zwei Längsausschnitten (3) umfasst, und die einzelnen Plattenpaare (2A, 2B) quer zueinander angeordnet und durch die Längsausschnitte (3) auf Schub lösbar miteinander verbunden sind, so dass die resultierende Raumstruktur einen Raum zwischen den Platen (2) umfasst und die oben erwähnte Ankerbuchse (4) mit geschlossenem Querschnitt definiert, und die nach außen ragenden Enden der Platten (2) vier Paare der obigen Stützen (5A, 5B) bilden, und in den ausgewählten Paaren von Stützen (5A, 5B) mindestens ein zusätzliches Paar von Löchern (7 ', 7") für die Ankerstangen (8) hergestellt ist, wobei in der Projektion auf eine senkrecht zur Längsachse der Ankerbuchse (4) verlaufende Ebene die Einschubrichtungen der Ankerstangen (8) in einem gegebenen Stützpaar (5A, 5B) entgegengesetzt sind.

2. Ankeranordnung nach Anspruch 1, **dadurch gekennzeichnet, dass** im Inneren der Ankerbuchse (4) ein zusätzliches Hohlprofil (9) mit einem dem Querschnitt der Ankerbuchse (4) entsprechenden geschlossenen Querschnitt lösbar montiert wird.

3. Ankeranordnung nach Anspruch 1 oder 2, **dadurch gekennzeichnet, dass** die Löcher (6', 6", 7', 7", 10) in den Stützen (5A, 5B) Langlöcher sind.

4. Ankeranordnung nach einem der Ansprüche 1 bis 3, **dadurch gekennzeichnet, dass** in jedem Paar der Stützen (5A, 5B) zwei oder drei Lochpaare (6', 6", 7', 7", 10) für die Ankerstangen (8) ausgeführt sind.

5. Ankeranordnung nach einem der Ansprüche 1 bis 4, **dadurch gekennzeichnet, dass** die Längsführungsachsen der Ankerstangen (8) in der Projektion auf eine senkrecht zur Längsachse der Ankerbuchse (4) verlaufende Ebene schräg gegenseitig sind.

## Revendications

1. L'ensemble d'ancrage (1) permettant de fixer des éléments de structures de bâtiments, muni de la prise d'ancrage (4) et des supports (5A, 5B) avec des orifices (6', 6") pour les tiges d'ancrage (8), sachant que les supports adjacents (5A, 5B) formant une paire sont équipés d'un orifice d'entrée (6') dans l'un des supports et d'un orifice de sortie (6") dans l'autre support, qui marquent le guidage de la tige d'ancrage (8) avec l'axe longitudinal de guidage incliné à un angle aigu par rapport au plan perpendiculaire à l'axe longitudinal de la prise d'ancrage (4), **caractérisé en ce qu'**il comprend une première paire de plaques parallèles (2A) avec deux découpes longitudinales (3) chacune et une seconde paire de plaques parallèles (2B) avec deux encoches longitudinales (3) chacune, et les paires séparées de plaques (2A, 2B) sont positionnées transversalement l'une par rapport à l'autre et raccordées au moyen d'un ajustement à la presse en utilisant lesdites découpes (3) de sorte que la structure spatiale créée définit un espace entre les plaques (2) formant la prise d'ancrage susmentionné (4) de section transversale fermée, tandis que les extrémités des plaques (2) faisant saillie vers l'extérieur constituent quatre paires des supports susmentionnés (5A, 5B), et dans des paires sélectionnées de supports (5A, 5B), au moins une paire supplémentaire d'orifices (7', 7") pour des tiges d'ancrage (8) est créée, sachant que dans une projection sur un plan perpendiculaire à l'axe longitudinal de la prise d'ancrage (4) les directions d'insertion des tiges d'ancrage (8) dans une paire spécifique de supports (5A, 5B) sont opposées.

2. L'ensemble d'ancrage selon la revendication 1, **caractérisé en ce qu'**à l'intérieur de la prise d'ancrage (4) un profilé creux supplémentaire (9) à section transversale fermée correspondant à la section transversale de la prise d'ancrage (4) est fixé de façon amovible.

3. L'ensemble d'ancrage selon la revendication 1 ou 2, **caractérisé en ce que** les orifices (6', 6", 7', 7", 10) dans les supports (5A, 5B) sont des orifices allongés.

4. L'ensemble d'ancrage selon l'une des revendications 1 à 3, **caractérisé en ce que** dans chaque paire de supports (5A, 5B) deux ou trois paires d'orifices (6', 6", 7', 7", 10) sont effectuées pour des tiges d'ancrage (8).

5. L'ensemble d'ancrage selon l'une des revendications 1 à 4, **caractérisé en ce que** lorsqu'il est projeté dans un plan perpendiculaire à l'axe longitudinal de la prise d'ancrage (4), les axes longitudinaux du guidage des tiges d'ancrage (8) sont mutuellement obliques.
